# EUROPÄISCHE PATENTANMELDUNG

(11) **EP 1 273 932 A1**
(43) Veröffentlichungstag der Anmeldung: **08.01.2003**
(21) Anmeldenummer: 02100781.0
(22) Anmeldetag: 04.07.2002
(51) Int. Cl.: G01T 1/20

(54) **Flacher dynamischer Strahlungsdetektor mit einer Beleuchtungsvorrichtung**

(30) Priorität: 06.07.2001 DE 10132924
(71) Anmelder: Philips Corporate Intellectual Property GmbH, 20099 Hamburg (DE); Koninklijke Philips Electronics N.V., 5621 BA Eindhoven (NL)
(72) Erfinder: Wischmann, Hans-Aloys, Dr., 52066, Aachen (DE); Wieczorek, Herfried, Dr., 52066, Aachen (DE); Busse, Falko, Dr., 52066, Aachen (DE); Schmidt, Ralf, 52066, Aachen (DE)
(74) Vertreter: Volmer, Georg, Dipl.-Ing.

(57) **Zusammenfassung**

Die Erfindung betrifft einen Strahlungsdetektor, zur Umwandlung von elektromagnetischer Strahlung (15) in elektrische Ladungsträger. Des weiteren betrifft die Erfindung ein Röntgenuntersuchungsgerät mit einem derartigen Strahlungsdetektor und ein Verfahren zur Herstellung eines Strahlungsdetektors. Um eine niedrige Bauhöhe des Strahlungsdetektors bei gleichbleibenden Anforderungen an die Rücksetzung der Umwandlungsanordnung (16,18) mittels einer Beleuchtungsvorrichtung (6) zu erreichen, wird vorgeschlagen, unter einer Glasplatte (2a) mit einer Photosensorenanordnung (2b) eine tragende Schicht (8) anzuordnen, die einerseits eine homogene Lichtverteilung des von unten einfallenden Lichtes vornimmt und andererseits dem Strahlungsdetektor die erforderliche Stabilität verleiht. In einer weiteren Ausführung wird vorgeschlagen anstelle der tragenden Schicht (8) eine Streufolie (14) anzuordnen, die die homogene Lichtverteilung vornimmt, wobei die Trägerfunktion von der Belenchtungsvorrichtung übernommen wird.

## Beschreibung

Die Erfindung betrifft einen Strahlungsdetektor zur Umwandlung von elektromagnetischer Strahlung in elektrische Ladungsträger. Des weiteren betrifft die Erfindung ein Röntgenuntersuchungsgerät mit einem derartigen Strahlungsdetektor und ein Verfahren zur Herstellung eines Strahlungsdetektors.

Strahlungsdetektoren werden insbesondere in der Medizintechnik und dort in der Röntgenuntersuchungstechnik eingesetzt und dienen dazu, Strahlungsbilder eines Untersuchungsobjektes, in der Regel eines Patienten, im Rahmen einer zumeist medizinischen Untersuchung oder Therapie aufzunehmen. Mittels eines Bildaufnahmesystems, zu dem auch der Röntgenstrahlungsdetektor gehört, werden von der das Untersuchungsobjekt durchdringenden Röntgenstrahlung Bilder erzeugt, die bspw. auf einem Monitor ausgegeben werden. Die auf den Röntgenstrahlungsdetektor einfallende Röntgenstrahlung wird in einer Umwandlungsanordnung in elektrische Ladungsträger umgewandelt. Die in der Umwandlungsanordnung erzeugten elektrischen Ladungsträger werden in zugeordneten Kapazitäten gesammelt und von einer nachgeschalteten Ausleseelektronik ausgelesen.

Ein Strahlungsdetektor ist generell derart aufgebaut, dass die elektromagnetische Strahlung auf eine Umwandlungsanordnung auftrifft. Je nach Ausgestaltung des Strahlungsdetektors wird die Strahlung in der Umwandlungsanordnung entweder in einer direkt konvertierenden Umwandlungsschicht in elektrische Ladungsträger umgewandelt, die dann ausgelesen werden, oder mittels zwei Umwandlungsschichten zuerst in sichtbares Licht und dann in einer darunter angeordneten zweiten Umwandlungsschicht, insbesondere einer Photosensorenanordnung, in elektrische Ladungsträger gewandelt und ausgelesen.

Bei Strahlungsdetektoren mit einer Umwandlungsanordnung, die zwei Umwandlungsschichten enthält, ist als erste Umwandlungsschicht eine Szintillatorschicht bspw. aus CsI:TI angeordnet. Unter dieser ersten Umwandlungsschicht, aus Sicht der einfallenden Strahlung, ist die zweite Umwandlungsschicht als Photosensorenanordnung ausgebildet. Die einzelnen Photosensoren detektieren die in sichtbares Licht umgewandelte Strahlung, die dann über die einzelnen Photosensoren pro Bildpixel ausgelesen werden. Die Umwandlung von Strahlung direkt in elektrische Ladungsträger in Strahlungsdetektoren mit einer Umwandlungsanordnung mit nur einer Umwandlungsschicht wird auch als Direktkonvertierung bezeichnet. Dabei ist die erste Umwandlungsschicht als direkt konvertierende Halbleiterschicht aus bspw. amorphem Selen ausgebildet. Strahlungsdetektoren mit direkter Umwandlung in nur einer Umwandlungsschicht können auch mittels einer PbO-Schicht realisiert sein, wobei die erzeugten Ladungsträger gespeichert und dann ausgelesen werden.

Unter der oder den Umwandlungsschichten, in Abhängigkeit des Aufbaus des Strahlungsdetektors, ist eine Beleuchtungsvorrichtung angeordnet, die zum Rücksetzen der einzelnen Pixel der Photosensorenanordnung im Rahmen der Vorbereitung des Strahlendetektors für eine weitere zu erfolgende Bildaufnahme dient. Auch bei Strahlungsdetektoren, die nur eine Umwandlungsschicht zur direkten Konvertierung aufweisen, ist es zweckmäßig, durch einen Rücksetzlichtimpuls eine Ladungsträgerüberschwemmung hervorzurufen und dadurch das Abklingverhalten der Umwandlungsschicht positiv zu beeinflussen, so dass eine schnellere Röntgenbildaufnahmefolge möglich ist und/oder eine bessere Qualität ohne Bildartefakte erreicht wird.

Diese bisher genannten Umwandlungsschichten werden von einem Substrat, bspw. aus Glas getragen.

Es hat sich herausgestellt, dass die Photosensorenanordnung oder zweite Umwandlungsschicht ein langsames Abklingen zeigt, welches sich nachteilig auf aufeinanderfolgende Bildaufnahmen auswirkt. Dieses Abklingverhalten ist ganz besonders dann nachteilhaft, wenn pro Zeiteinheit viele Bilder akquiriert werden. Der Grund für dieses Abklingen liegt in physikalischen Vorgängen, die beim Einfallen von optischen Photonen in die Photosensoren ablaufen. Beim Einfallen eines Photons in das Halbleitermaterial der Photosensorenanordnung wird ein Elektron aus dem Valenzband in das Leitungsband angehoben und die so entstandene elektrische Ladung wird auf Elektroden der Halbleiterschicht, die eine Kapazität bilden, gespeichert. Da jedoch auf Grund von Verunreinigungen und Gitterfehlern in der Halbleiterschicht der Photosensorenanordnung sogenannte Traps oder Haftstellen vorhanden sind, bleiben manche Elektronen in der Halbleiterschicht hängen. Normalerweise werden die in den Traps befindlichen Ladungsträger in der Folgezeit thermisch emittiert und auf die Elektroden transferiert, wobei dies jedoch lange Zeit in Anspruch nehmen kann. Diese quasi thermische Emission, die auch dann stattfindet, wenn die Photosensorenanordnung bereits ausgelesen ist und ein zweites Bild aufgenommen wird, verursacht, dass in nachfolgend aufgenommenen Bildern sogenannte Nachbilder oder Bildartefakte des vorher aufgenommenen Bildes sichtbar sein können.

Um dieses Problem zu lösen, ist es bekannt, dass nach erfolgter Aufnahme eines Röntgenbildes die Photosensorenanordnung ausgelesen wird und anschließend wenigstens ein auf die zweite Umwandlungsschicht wirkender Lichtpuls mittels der Beleuchtungsvorrichtung abgegeben wird. Mittels des Lichtpulses wird die zweite Umwandlungsschicht mit Ladungsträgern überschwemmt und die Haftstellen in allen Pixeln gleichmäßig besetzt. Um eine möglichst effektive Besetzung der Haftstellen durch Ladungsträger zu erreichen, wird Licht einer bestimmten Wellenlänge von der Beleuchtungsvorrichtung mittels eines oder mehrerer separater Lichtimpulse in kurzer Abfolge emittiert. Voraussetzung für ein effektives Zurücksetzen ist jedoch, dass das Licht, welches von der Beleuchtungsvorrichtung ausgesendet wird, in Richtung der Photosensorenanordnung homogen verteilt wird.

In der DE 19914217 wird ein Röntgenstrahlendetektor beschrieben, bei dem eine Szintillatoranordnung über einer Pixelmatrix angeordnet ist und diese über einem Glasträger angeordnet sind, der die Szintillatoranordnung und die Pixelmatrix trägt. Unter dem Glasträger befindet sich eine Luftschicht und unter dieser Luftschicht ist die Lichtquelle oder Beleuchtungsvorrichtung angeordnet. Diese Luftschicht ist erforderlich, um eine räumliche Verteilung des von der Beleuchtungsvorrichtung abgestrahlten Lichts zu erreichen und um das Licht möglichst homogen zu verteilen. Die direkte Anordnung der Beleuchtungsvorrichtung unter dem Glasträger ohne eine entsprechende Luftschicht ist nachteilig, da dann die erforderliche homogene Lichtverteilung nicht erreicht wird und somit das Rücksetzen der Photosensorenanordnung und auch der Szintillator- oder Umwandlungsschicht nicht effektiv ist. Der Glasträger, der insbesondere zur Stabilisierung der auf ihm angeordneten Photosensorenanordnung und der Szintillator- oder Umwandlungsschicht dient, kann diese homogene Lichtverteilung nicht erbringen. Ein weiterer Nachteil des vorliegenden Detektors besteht in der erheblichen Höhe, welche durch die Glasträgerschicht und durch die Luftschicht entsteht.

Aufgabe der Erfindung ist es deshalb, einen Strahlungsdetektor, ein Röntgenuntersuchungsgerät mit einem Strahlungsdetektor und ein Verfahren zur Herstellung eines Strahlungsdetektors anzugeben, bei denen bei gleichbleibend hoher Rücksetzanforderung eine niedrige Bauhöhe des Strahlungsdetektors ermöglicht wird.

Die Aufgabe wird mit einem Strahlungsdetektor zur Umwandlung von elektromagnetischer Strahlung in elektrische Ladungen gelöst, mit wenigstens einer Umwandlungsanordnung und einer Beleuchtungsvorrichtung und einer, wenigstens die Umwandlungsanordnung tragenden Schicht, wobei die tragende Schicht eine räumlich homogene Verteilung des von der Beleuchtungsvorrichtung ausgestrahlten Lichtes bewirkt.

Der Erfindung liegt der Gedanke zugrunde, dass die Funktionen des die Umwandlungsschichten tragenden Glasträgers und der Luftschicht aus dem Stand der Technik vorteilhaft kombiniert werden können, was zu einer erheblichen Reduzierung der Bauhöhe mit weiteren, später detailliert erklärten Verbesserungen und vorteilhaften Wirkungen führt.

Dazu wird vorgeschlagen, dass zwischen der Umwandlungsanordnung und der Beleuchtungsvorrichtung eine tragende Schicht angeordnet wird, die einerseits eine homogene Lichtverteilung vornimmt und andererseits eine ausreichende mechanische Stabilität aufweist, die über der tragenden Schicht angeordnete Umwandlungsanordnung aufzunehmen und stabil zu tragen. Die homogene Lichtverteilung ist zum effektiven Rücksetzen der Umwandlungsanordnung erforderlich und wird beim Stand der Technik durch die Luftschicht realisiert. Die homogene Lichtverteilung wird insbesondere dadurch erreicht, dass zwischen der Umwandlungsanordnung und der Beleuchtungsvorrichtung eine Kunststoffschicht, bspw. eine Acrylschicht angeordnet ist. Diese weist die erforderliche Lichtabsorption, Wärmeleitfähigkeit und auch mechanische Stabilität auf, um die darüber angeordneten Umwandlungsanordnungen zu tragen.

Die Beleuchtungsvorrichtung sendet das Rücksetzlicht insbesondere in Richtung der über ihr angeordneten Umwandlungsanordnung aus. Dabei ist es besonders effektiv, eine Wellenlänge zu wählen, die im Empfindlichkeitsbereich der Umwandlungsanordnung liegt. Hier ist es vorteilhaft, Licht mit einer Wellenlänge im Bereich von 300-900 nm auszuwählen.

In einer bevorzugten Ausführungsform der Erfindung sind in die tragende Schicht Kühlmittelräume eingebracht, denen eine Kühlflüssigkeit zuführbar ist, wodurch eine sehr effektive Wärmeabführung im Strahlungsdetektor erreichbar ist. Eine konstante Temperatur im Strahlungsdetektor wirkt sich vorteilhaft sowohl auf die Umwandlungsanordnung als auch auf die Auslesseelektronik aus. Durch eine geringere Temperatur erhöht sich bspw. die Empfindlichkeit der ersten Umwandlungsschicht, speziell bei CsI:Tl als Szintillatormaterial. Eine konstante Temperatur erhöht die Stabilität der Dunkelbilder.

In einer weiteren vorteilhaften Ausgestaltung der Erfindung ist die Beleuchtungsvorrichtung mit einer Streufolie verbunden, so dass die Beleuchtungsvorrichtung die mechanische Stabilität oder den mechanischen Träger der darüber angeordneten Umwandlungsanordnung übernimmt. Dadurch lässt sich ein noch flacherer Strahlungsdetektor herstellen. Die Streufolie hat die Aufgabe, das von unten einfallende Rücksetzlicht homogen zu verteilen. Mittels der Folie kann vorteilhafterweise gegenüber dem Stand der Technik in dem flacheren Strahlungsdetektor die Wärme besser abtransportiert werden kann, so dass eine bisher benötigte Wasserkühlung entfallen kann.

Mittels der Acrylschicht oder der Streufolie kann vorteilhafterweise in dem Strahlungsdetektor die Wärme durch Wärmeleitung anstelle von Wärmestrahlung abtransportiert werden, so dass eine bisher benötigte Kühlung effizienter arbeiten oder ggfs. ganz entfallen kann.

In einer besonders vorteilhaften Ausgestaltung der Erfindung ist diese Acrylschicht direkt mit der Beleuchtungsvorrichtung vergossen, so dass die Beleuchtungsvorrichtung formschlüssig mit der tragenden Schicht verbunden ist.

Die Umwandlungsanordnung umfasst in einer ersten Ausführungsform zwei Umwandlungsschichten. Dabei wird die erste Umwandlungsschicht von einer Szintillatoranordnung gebildet. Diese erste Umwandlungsschicht wandelt die auf diese Umwandlungsschicht auftreffende Strahlung in sichtbares Licht. Unter dieser ersten Umwandlungsschicht ist eine zweite Umwandlungsschicht angeordnet. Diese Umwandlungsschicht wandelt das sichtbare Licht bspw. in einer Photosensorenanordnung in elektrische Ladungsträger.

In einer weiteren Ausführungsform der Erfindung umfasst die Umwandlungsanordnung nur eine direktkonvertierende Umwandlungsschicht. Diese wandelt die Röntgenstrahlung in elektrische Ladungsträger um, die über Elektroden ausgelesen werden.

Die Photosensorenanordnung ist in Dünnfilmtechnik auf einer Glasplatte aufgebracht. Nach dem Stand der Technik würde diese Glasplatte mit dem darunter liegenden Glasträger verklebt werden, wodurch eine zusätzliche Klebeschicht erforderlich wäre, in der bspw. Blasen auftreten können, die das von unten oder hinten einfallende Rücksetzlicht um bis zu 10 % abschwächen. An den Blasenrändern entstehen Inhomogenitäten, sogenannte Newtonringe, die ein gleichmäßiges Rücksetzen der Photosensorenanordnung, sowie eine räumlich aufgelöste Messung des Gaineffekts oder der Nichtlinearität der darüber angeordneten Photosensoren mit Hilfe des Rücksetzlichtes behindern.

Ein weiterer Vorteil ergibt sich dadurch, dass die Schwingungen der Glasplatte durch die tragende Schicht, die bspw. aus Acryl gebildet ist, in Verbindung mit der Beleuchtungsvorrichtung gedämpft werden, wenn diese mechanisch an die Glasplatte, auf der die Photosensorenanordnung aufgebracht ist, angepresst wird, so dass sich Mikrophonieprobleme verringern.

Sowohl eine direkt konvertierende Schicht aus PbO oder eine Szintillatoranordnung aus CsI:Tl kann auf die Glasplatte mit der in Dünnfilmtechnologie aufgebrachten Sensoren oder Elektroden aufgedampft werden.

In einer vorteilhaften Ausführungsform wird auf der Rückseite der etwa 1 mm dicken Glasplatte mit der Photosensorenanordnung eine Acrylglasplatte von etwa 4 mm Dicke gelegt, die wiederum von der Beleuchtungsvorrichtung mechanisch gegen die Glasplatte mit der Photosensorenanordnung gedrückt wird.

In einer anderen vorteilhaften Ausführungsform der Erfindung wird die Beleuchtungsvorrichtung direkt nach der Bestückung mit bspw. LED's in eine flüssige Acrylmasse gepresst, so dass die Beleuchtungsvorrichtung mit der tragenden Schicht verbunden und direkt gekoppelt ist und eine plane Oberfläche erhält. Dadurch entstehen keine optischen Verluste durch eine zusätzliche Übergangsschicht zwischen Beleuchtungsvorrichtung und tragender Schicht. Die plane Oberfläche wird mechanisch an die Umwandlungsanordnung gepresst.

Vorteilhaft ist in beiden erwähnten Fällen eine Beimischung von bspw. Titandioxidpulver in geeigneter Konzentration zur tragenden Schicht, so dass die Verteilung des von den LED's oder von der Beleuchtungsvorrichtung emittierten Lichtes räumlich homogenisiert wird.

Zur besseren Wärmeabführung sowie zur Schwingungsdämpfung kann auch in dieser Ausführungsform die Beleuchtungsvorrichtung nach der Bestückung in Acrylmasse getaucht werden, um durch die plane Oberfläche einen großflächigen Kontakt zur Glasträgerplatte mit der Photosensorenanordnung zu gewährleisten. Hierbei wird dann aber kein Zusatz zur Lichtstreuung mehr benötigt.

Die Aufgabe wird auch mit einem Röntgenuntersuchungsgerät gelöst, bei dem ein erfindungsgemäßer Röntgenstrahlungsdetektor einer Röntgenröhre gegenüber angeordnet wird und die von der Röntgenröhre ausgestrahlte Röntgenstrahlung einen Patienten oder ein zu untersuchendes Objekt passiert und auf den erfindungsgemäßen Röntgenstrahlungsdetektor trifft.

Die Aufgabe wird auch durch ein Verfahren zur Herstellung eines erfindungsgemäßen Strahlungsdetektors nach Anspruch 10 gelöst.

Nachfolgend werden anhand der Figuren die Ausführungsbeispiele beschrieben.
- Fig.1: zeigt einen schematischen Aufbau eines derzeitigen flachen dynamischen Röntgendetektors.
- Fig.2: zeigt eine erste Ausführungsform des erfindungsgemäßen Strahlungsdetektors
- Fig.3: zeigt eine zweite Ausführungsform des erfindungsgemäßen Strahlungsdetektors.
- Fig. 4: zeigt einen Aufbau eines direkt konvertierenden Strahlungsdetektors

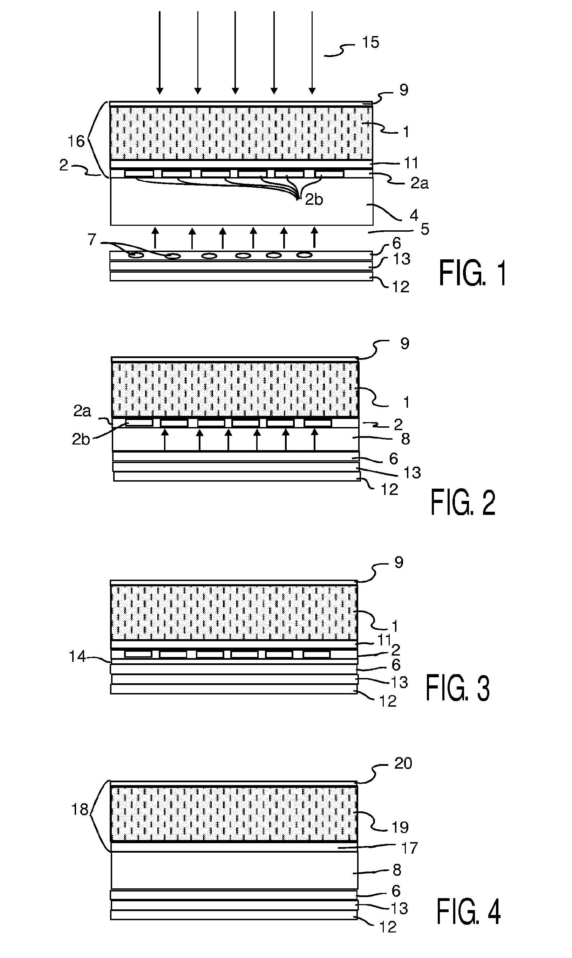

Fig. 1 zeigt einen Aufbau eines Strahlungsdetektors nach dem Stand der Technik. Dabei wird die Umwandlungsanordnung 16 im wesentlichen aus einer ersten Umwandlungsschicht 1 und einer zweiten Umwandlungsschicht 2 gebildet. Die Umwandlungsschicht 1ist mit der Glasplatte 2a mit der darauf in Dünnfilmtechnik aufgebrachten Photosensorenanordnung 3 bspw. in amorpher Siliziumtechnologie über eine Klebeschicht 11 verbunden. Über der Umwandlungsschicht 1 ist eine Reflexionsschicht 9 angeordnet, die nach oben reflektiertes Licht zurück in die Richtung der Photosensorenanordnung reflektiert. Der Glasträger 4 trägt die Glasplatte 2a mit der darauf aufgebrachten Photosensorenanordnung 3 und die darüber befindliche Umwandlungsschicht 1. Unter dem Glasträger 4 ist eine Luftschicht 5 von etwa 10 mm Höhe angeordnet. Unter dieser Luftschicht 5 ist die Beleuchtungsvorrichtung 6 mit Leuchtdioden 7 (LED) angeordnet. Die einfallende Röntgenstrahlung 15 passiert die Reflexionsschicht 9 und wird in der als Szintillator ausgebildeten Umwandlungsschicht 1 in sichtbares Licht umgewandelt. Das sichtbare Licht wird in der Photosensorenanordnung 3 in elektrische Ladungsträger umgewandelt, die einer Ausleseelektronik 12, die unter der Beleuchtungsvorrichtung 6 angeordnet ist, zugeführt werden. Die Ausleseelektronik ist durch eine Röntgenstrahlen abschirmende Schicht 13 geschützt.

In Fig.2 ist die Umwandlungsschicht 1 über der Glasplatte 2a mit der Photosensorenanordnung 2b angeordnet. Die Glasplatte 2a und die Photosensorenanordnung 2b bilden die Umwandlungsschicht 2Diese beiden Umwandlungsschichten 1 und 2 werden von einer tragenden Schicht 8, bspw. aus Acryl getragen. Dem Acryl ist Titandioxid beigemischt. Es kann auch jedes andere geeignete Material zur homogenen Lichtverteilung mit entsprechender Stabilität verwendet werden. Unter dieser tragenden Schicht 8 ist die Beleuchtungsvorrichtung 6 angeordnet.

Auf die Pixel mit den Photosensoren 2b und/oder den Kapazitäten zur Ladungsspeicherung ist bspw. eine Halbleiterschicht aus CsI aufgedampft. Dadurch entfällt die Klebeschicht 11 zwischen der ersten und zweiten Umwandlungsschicht 1, 2.

In Fig.3 ist eine weitere Ausführungsform der Erfindung dargestellt. Hierbei ist die Umwandlungsschicht 1 über der Glasplatte 2a mit der Photosensorenanordnung 2b angeordnet. Unter der Glasplatte 2a mit der Photosensorenanordnung 2b befindet sich eine Streufolie 14, die direkt auf die Oberfläche der Beleuchtungsvorrichtung 6 aufgebracht ist. In dieser Ausführungsform übernimmt die Beleuchtungsvorrichtung 6 die stabilisierende Funktion.

Figur 4 zeigt einen Strahlungsdetektor mit einer direkt konvertierenden Umwandlungsanordnung 18. Diese umfasst eine Umwandlungsschicht 19, bspw. aus amorphem Selen oder aus PbO, eine Gegenelektrode 20 und Ladungsträgersensoren 17. Die Ladungsträgersensoren 17umfassen Elektroden, die mittels einer Kapazität die erzeugten Ladungsträger über die Zeit speichern, so dass diese ausgelesen werden können. Die Generation der Ladungsträger in der Umwandlungsschicht 19 findet im elektrischen Feld zwischen Gegenelektrode 20 und nicht dargestellten Pixelelektroden in den Ladungsträgersensoren 17 statt. Die Umwandlungsanordnung 18 ist auch hier über der tragenden Schicht 8 angeordnet, die wiederum über der Beleuchtungsvorrichtung 6 angeordnet ist. Die tragende Schicht 8 verteilt das von der Beleuchtungsvorrichtung ausgestrahlte Licht homogen.

In den Figuren 2, 3, 4 ist deutlich sichtbar, dass der Strahlungsdetektor in einer wesentlich geringeren Höhe als nach dem Stand der Technik in Fig. 1 herstellbar ist.

## Patentansprüche

1. Strahlungsdetektor zur Umwandlung von elektromagnetischer Strahlung (15) in elektrische Ladungsträger mit wenigstens einer Umwandlungsanordnung (18,16) und einer Beleuchtungsvorrichtung (6) und einer, wenigstens die Umwandlungsanordnung (18, 16) tragenden Schicht (8), wobei die tragende Schicht (8) eine räumlich homogene Verteilung des von der Beleuchtungsvorrichtung (6) ausgestrahlten Lichtes bewirkt.

2. Strahlungsdetektor nach Anspruch 1,
**dadurch gekennzeichnet,**
**dass** die tragende Schicht (8) zwischen der Umwandlungsanordnung (16,18) und der Beleuchtungsvorrichtung (6) angeordnet ist und die Beleuchtungsvorrichtung (6) vorgesehen ist, Licht im Wellenlängenbereich von 300- 900 nm insbesondere in Richtung der Umwandlungsanordnung (16, 18) auszusenden.

3. Strahlungsdetektor nach Anspruch 1,
**dadurch gekennzeichnet,**
**dass** die tragende Schicht (8) aus einem Material mit niedriger Lichtabsorption und/oder hoher Wärmeleitfähigkeit und /oder mechanischer Stabilität gebildet ist.

4. Strahlungsdetektor nach Anspruch 1,
**dadurch gekennzeichnet,**
**dass** die tragende Schicht (8) formschlüssig mit der Beleuchtungsvorrichtung (6) verbunden ist.

5. Strahlungsdetektor nach Anspruch 1,
**dadurch gekennzeichnet,**
**dass** die tragende Schicht (8) Kühlmittelräume aufweist, denen von außen ein Kühlmittel zur Wärmeabfuhr zuführbar ist.

6. Strahlungsdetektor nach Anspruch 1,
**dadurch gekennzeichnet,**
**dass** die tragende Schicht (8) TiO₂ enthält.

7. Strahlungsdetektor zur Umwandlung von elektromagnetischer Strahlung in elektrische Ladungsträger
**dadurch gekennzeichnet,**
**dass** zwischen einer Umwandlungsanordnung (16,18) und einer Beleuchtungsvorrichtung (6) eine Streufolie (14) als Verteilungsschicht zur homogenen Lichtverteilung des von einer Beleuchtungsvorrichtung abgegebenen Lichtes angeordnet ist und die Beleuchtungsvorrichtung (6) die über ihr angeordneten Schichten (14) und Anordnungen (16,18) trägt.

8. Strahlungsdetektor nach den Ansprüchen 1 bis 7,
**dadurch gekennzeichnet,**
**dass** die Umwandlungsanordnung (16) eine erste Umwandlungsschicht (1) zur Umwandlung von elektromagnetischer Strahlung in sichtbares Licht und eine zweite Umwandlungsschicht (2) zur Umwandlung von Licht in elektrische Ladungsträger umfasst, wobei die zweite Umwandlungsschicht (2) unter der ersten Umwandlungsschicht (1) aus Richtung der einfallenden elektromagnetischen Strahlung angeordnet ist.

9. Strahlungsdetektor nach den Ansprüchen 1 bis 7,
**dadurch gekennzeichnet,**
**dass** die Umwandlungsanordnung (18) eine direkt konvertierende Umwandlungsschicht (19) zur Umwandlung von Röntgenstrahlung (15) in elektrische Ladungsträger, eine Gegenelektrode (20) und Ladungsträgersensoren (17) mit Auslese- und Speicherkomponenten umfasst.

10. Röntgenuntersuchungsgerät mit einer Röntgenstrahlungsquelle und einem Strahlungsdetektor nach einem der Ansprüche 1 bis 9.

11. Verfahren zur Herstellung eines Strahlungsdetektors, bei dem eine Umwandlungsanordnung (16, 18) zur Umwandlung von elektromagnetischer Strahlung in elektrische Ladungsträger mit einer die Umwandlungsanordnung (16, 18) tragenden Schicht (8) verbunden wird, und eine Beleuchtungsvorrichtung (6) mechanisch an die tragende Schicht (8) gepresst wird, wobei mittels der tragenden Schicht (8) von der Beleuchtungseinrichtung (6) ausgestrahltes Licht homogen verteilt wird.
